# EUROPÄISCHE PATENTSCHRIFT

(11) **EP 4 108 837 B1**
(45) Veröffentlichungstag und Bekanntmachung des Hinweises auf die Patenterteilung: **15.07.2026**
(21) Anmeldenummer: 22177173.6
(22) Anmeldetag: 03.06.2022
(51) Int. Cl.: E02F 3/96, E02F 9/26

(54) **SYSTEM UND VERFAHREN ZUR LOKALISIERUNG EINES ANBAUWERKZEUGS**
SYSTEM AND METHOD FOR LOCATING AN ATTACHED TOOL
SYSTÈME ET PROCÉDÉ DE LOCALISATION D'UN OUTIL AUXILIAIRE

(30) Priorität: 23.06.2021 DE 102021116246
(43) Veröffentlichungstag der Anmeldung: 28.12.2022
(73) Patentinhaber: Liebherr-Hydraulikbagger GmbH, 88457 Kirchdorf/Iller (DE)
(72) Erfinder: ZITTERBART, Thomas, 89165 Dietenheim (DE); SCHICK, Katharina, 87700 Memmingen (DE)
(74) Vertreter: Lorenz Seidler Gossel Part. mbB

(56) Entgegenhaltungen:
- EP-A2- 2 042 276
- WO-A1-2018/111850
- US-A1- 2019 057 295
- US-A1- 2019 112 792
- US-A1- 2020 256 039
- US-A1- 2020 272 153
- US-A1- 2021 123 218

## Beschreibung

Die vorliegende Erfindung betrifft ein System zur Lokalisierung bzw. Zuordnung eines Anbauwerkzeugs für ein Arbeitsgerät mit einer mit dem Anbauwerkzeug verbundenen ersten Kommunikationseinheit, einer mit dem Arbeitsgerät verbundenen zweiten Kommunikationseinheit und einem mit der ersten und/oder zweiten Kommunikationseinheit in kommunikativer Verbindung stehendem Identifikationsmodul. Die vorliegende Erfindung betrifft ferner ein Verfahren zur Verifizierung bzw. Identifizierung eines Anbauwerkzeugs für ein Arbeitsgerät mittels eines solchen Systems.

Bei einigen Arbeitsgeräten wie z.B. Hydraulikbaggern ist es bekannt, eine Reihe von unterschiedlichen Anbauwerkzeugen am Einsatzort bereitzuhalten, welche zur Ausführung spezieller Arbeiten vor Ort an das Arbeitsgerät angebaut bzw. von diesem abgebaut werden können. Üblicherweise sind derartige Arbeitsgeräte mit einem Schnellwechselsystem ausgestattet, um die verschiedenen Anbauwerkzeuge schnell und einfach aufnehmen bzw. ablegen zu können. Häufig werden mehrere Arbeitswerkzeuge am Einsatzort nahe beieinander gelagert, um bei Bedarf vom Arbeitsgerät aufgenommen bzw. abgelegt zu werden.

Um den Betrieb des Arbeitsgeräts auf das jeweilige angebaute Werkzeug einstellen zu können, ist es bekannt, die Anbauwerkzeuge mit Sende-/Empfangsmodulen auszustatten, die beispielsweise Identifikations- oder Geometriedaten an eine Steuerung des Arbeitsgeräts übermitteln. Aufgrund der drahtlosen Übertragung und der Tatsache, dass die Empfangsmodule eine gewisse Reichweite besitzen, kommt es jedoch immer wieder vor, dass Signale mehrerer Anbauwerkzeuge empfangen werden. Da die ausgetauschten Daten mitunter sicherheitsrelevant sein können, ist es erforderlich, dass korrekt zugeordnet wird, welches Anbauwerkzeug mit welchem Arbeitsgerät gekoppelt ist.

Der vorliegenden Erfindung liegt daher die Aufgabe zugrunde, die Zuverlässigkeit der Zuordnung zwischen Anbauwerkzeug und Arbeitsgerät zu erhöhen. Erfindungsgemäß wird diese Aufgabe durch System mit den Merkmalen des Anspruchs 1 und ein Verfahren mit den Merkmalen des Anspruchs 13 gelöst. Vorteilhafte Ausführungsformen der Erfindung ergeben sich aus den Unteransprüchen und der nachfolgenden Beschreibung.

Demnach wird einerseits ein System zur Lokalisierung eines Anbauwerkzeugs für ein Arbeitsgerät vorgeschlagen, wobei es sich bei dem Arbeitsgerät beispielsweise um einen Hydraulikbagger und bei dem Anbauwerkzeug beispielsweise um einen Baggerlöffel, einen Mehrschalengreifer oder eine Stielverlängerung handeln kann. Die Erfindung kann jedoch auch bei anderen Arbeitsgeräten zum Einsatz kommen, bei denen verschiedene Anbauwerkzeuge Verwendung finden können.

Das erfindungsgemäße System umfasst eine erste Kommunikationseinheit, welche mit einem Anbauwerkzeug verbunden ist. Die erste Kommunikationseinheit umfasst einen ersten Beschleunigungssensor, mittels welchem eine momentane Beschleunigung des Anbauwerkzeugs erfassbar ist, und ist dazu eingerichtet, ein die Beschleunigung repräsentierendes erstes Beschleunigungssignal bereitzustellen.

Das erfindungsgemäße System umfasst ferner eine zweite Kommunikationseinheit, welche mit dem Arbeitsgerät verbunden ist, und zwar im Bereich eines Verbindungsbereichs zum Anbau des Anbauwerkzeugs. Der Verbindungsbereich kann am Ende eines Baggerstiels angeordnet sein und beispielsweise einen Schnellwechsler darstellen oder umfassen. Die zweite Kommunikationseinheit umfasst einen zweiten Beschleunigungssensor, mittels welchem eine momentane Beschleunigung des Verbindungsbereichs erfassbar ist, und ist eingerichtet, ein zweites Beschleunigungssignal bereitzustellen, welches die erfasste Beschleunigung des Verbindungsbereichs repräsentiert.

Darüber hinaus umfasst das erfindungsgemäße System ein Identifikationsmodul, welches mit der ersten und/oder mit der zweiten Kommunikationseinheit gekoppelt ist. Das Identifikationsmodul ist dazu eingerichtet, die ersten und zweiten Beschleunigungssignale zu empfangen bzw. zu erhalten und miteinander zu vergleichen, um anhand dieses Vergleichs das Anbauwerkzeug zu lokalisieren, bzw. zuzuordnen. Insbesondere kann das Identifikationsmodul anhand des vorgenannten Vergleichs erkennen, ob ein bestimmtes Anbauwerkzeug mit dem Arbeitsgerät verbunden, d.h. an den Verbindungsbereich angebaut ist, oder ob es beispielsweise auf dem Boden abgelegt ist oder an einem zweiten Arbeitsgerät in der Umgebung. Bei dem Identifikationsmodul kann es sich um einen Softwarebaustein bzw. um ein Programm handeln.

Der erfindungsgemäße Gedanke besteht also darin, eine sichere und zuverlässige Zuordnung bzw. Identifikation eines Anbauwerkzeugs dadurch zu erreichen, dass die Beschleunigungen von Anbauwerkzeug und Verbindungsbereich gemessen und ausgewertet, d. h. miteinander verglichen werden. Ist das Anbauwerkzeug, dessen Signale (erstes Beschleunigungssignal) vom Arbeitsgerät (bzw. von der zweiten Kommunikationseinheit) empfangen werden, am Verbindungsbereich montiert, so erfahren Anbauwerkzeug und Verbindungsbereich bei einer Bewegung des Verbindungsbereichs eine ähnliche Beschleunigung. Wird nur das Anbauwerkzeug bewegt, so erfährt letzteres ebenfalls eine Beschleunigung. Umgekehrt erfährt ein auf dem Boden abgelegtes Anbauwerkzeug keine Beschleunigung.

Empfängt nun also beispielsweise die zweite Kommunikationseinheit zwei erste Beschleunigungssignale von zwei unterschiedlichen Anbauwerkzeugen, von denen eines an den Verbindungsbereich angebaut und das andere am Boden abgesetzt ist, so wird während einer Bewegung des Verbindungsbereichs (beispielsweise einem Verschwenken eines Baggerstiels) die Beschleunigung, welche durch eines der beiden ersten Beschleunigungssignale repräsentiert wird, der Beschleunigung des Verbindungsbereichs (repräsentiert durch das zweite Beschleunigungssignal) ähnlicher sein als die Beschleunigung, die durch das andere erste Beschleunigungssignal repräsentiert wird.

Wird nur das Anbauwerkzeug bewegt (z.B. relativ zum Verbindungsbereich verschwenkt), so ist die Beschleunigung, welche durch eines der beiden ersten Beschleunigungssignale repräsentiert wird, größer als die Beschleunigung, die durch das andere erste Beschleunigungssignal repräsentiert wird.

Für eine zuverlässige Zuordnung des angebauten Anbauwerkzeugs ist es daher vorteilhaft, dass der Verbindungsbereich oder zumindest das Anbauwerkzeug bewegt wird, sodass sich ein ausreichender Unterschied in der Beschleunigung zwischen stationären und angebauten Anbauwerkzeugen ergibt. Die durch das erfindungsgemäße System erreichte automatische Identifizierung des jeweils angebauten Anbauwerkzeugs dient dabei insbesondere nicht der Auswahl des richtigen Anbauwerkzeugs durch den Bediener bzw. einer entsprechenden Bedienhilfe, sondern soll sicherstellen, dass beispielsweise eine Steuerung des Arbeitsgeräts für den Betrieb relevante Daten nur von dem angebauten Anbauwerkzeug und nicht von ebenfalls in Reichweite befindlichen, nicht angebauten Anbauwerkzeugen erhält. Die automatische Identifizierung bzw. Zuordnung kann somit insbesondere automatisch direkt nach Anbau bzw. Aufgreifen des Anbauwerkzeugs erfolgen, sobald eine Bewegung bzw. Beschleunigung des Verbindungsbereichs und/oder Anbauwerkzeugs erfolgt.

Allerdings ist mittels des erfindungsgemäßen Systems theoretisch auch ohne Beschleunigung des angebauten Anbauwerkzeugs eine Zuordnung möglich, beispielsweise indem die Signalstärken der drahtlosen Verbindungen miteinander verglichen werden. Hierbei wird davon ausgegangen, dass sich das an den Verbindungsbereich angebaute Anbauwerkzeug näher am Verbindungsbereich befindet als andere Anbauwerkzeuge und somit das erste Beschleunigungssignal der entsprechenden ersten Kommunikationseinheit stärker ist, d.h. eine höhere Amplitude aufweist, als die Signale der anderen Anbauwerkzeuge.

Bevorzugt findet aber ein Vergleich der Beschleunigungssignale während einer Bewegung des angebauten Anbauwerkzeugs statt, sodass das "korrekte" erste Beschleunigungssignal eine Beschleunigung größer Null repräsentiert. Bei dieser Bewegung kann es sich um eine automatisch beim mechanischen Kopplungsvorgang auftretende Bewegung handeln, sodass hier automatisch eine geeignete Auswertung erfolgen kann. Der Vergleich der Beschleunigungssignale bzw. die Zuordnung eines Anbauwerkzeugs erfolgt vorzugsweise automatisch, sodass der Bediener hier nichts weiter veranlassen muss.

In einer möglichen Ausführungsform ist vorgesehen, dass die erste Kommunikationseinheit eingerichtet ist, das erste Beschleunigungssignal drahtlos an eine Empfangseinheit zu übermitteln, beispielsweise über RFID oder Bluetooth, vorzugsweise BLE (Bluetooth Low Energy). Die Empfangseinheit ist vorzugsweise eingerichtet, Signale innerhalb eines begrenzten Empfangsradius zu empfangen. Diese kann im Falle von BLE mehrere Meter betragen, sodass Signale mehrerer Anbauwerkzeuge gleichzeitig empfangen werden können. Umgekehrt hat die erste Kommunikationseinrichtung insbesondere einen begrenzten Senderadius, welcher ebenfalls einige Meter betragen kann.

In einer weiteren möglichen Ausführungsform ist vorgesehen, dass die zweite Kommunikationseinheit die Empfangseinheit umfasst und eingerichtet ist, das erste und das zweite Beschleunigungssignal dem Identifikationsmodul bereitzustellen, beispielsweise über Kabel oder drahtlos. Die Empfangseinheit kann in die zweite Kommunikationseinheit integriert sein.

Eine Möglichkeit besteht darin, dass die zweite Kommunikationseinheit das Identifikationsmodul umfasst. Das Identifikationsmodul kann dabei ein Softwarebaustein sein, welcher in einem Datenspeicher der zweiten Kommunikationseinheit abgelegt ist. In diesem Fall wird der Vergleich der Beschleunigungssignale, d.h. die Auswertung, lokal in der zweiten Kommunikationseinheit durchgeführt. Darüber hinaus kann die zweite Kommunikationseinheit mit einer Steuerung des Arbeitsgeräts verbunden sein, sodass die Steuerung und die zweite Kommunikationseinheit Daten austauschen können. Insbesondere kann vorgesehen sein, dass über die zweite Kommunikationseinheit Daten des identifizierten Anbauwerkzeugs, die über die erste Kommunikationseinheit bereitgestellt werden, an die Steuerung übermittelt werden können (Schnittstelle zur Steuerung).

Eine weitere Möglichkeit besteht darin, dass eine separate, mit dem Arbeitsgerät verbundene Identifikationseinheit vorgesehen ist, welche das Identifikationsmodul umfasst und eingerichtet ist, das erste und das zweite Beschleunigungssignal von der zweiten Kommunikationseinheit kabelgebunden oder drahtlos zu empfangen. Die Identifikationseinheit muss dabei nicht im Bereich des Verbindungsbereichs angeordnet sein, sondern kann sich an einer beliebigen Stelle des Arbeitsgeräts befinden, beispielsweise an oder in einem Oberwagen des Arbeitsgeräts oder in einer Fahrerkabine. In diesem Fall laufen die verschiedenen Signale der Kommunikationseinheiten zentral in der Identifikationseinheit zusammen, wo u.a. die Auswertung bzw. der Vergleich der Beschleunigungssignale stattfindet.

Die Identifikationseinheit kann einen Datenspeicher umfassen, auf dem das Identifikationsmodul als Softwarebaustein abgelegt ist. Darüber hinaus kann die Identifikationseinheit mit einer Steuerung des Arbeitsgeräts verbunden sein, sodass die Steuerung und die Identifikationseinheit Daten austauschen können. Insbesondere kann vorgesehen sein, dass über die Identifikationseinheit Daten des identifizierten Anbauwerkzeugs, die über die erste Kommunikationseinheit bereitgestellt werden, an die Steuerung übermittelt werden können (Schnittstelle zur Steuerung).

Bevorzugt stehen die zweite Kommunikationseinheit und die Identifikationseinheit drahtlos miteinander in Verbindung. Alternativ können diese beiden Einheiten per Kabel miteinander verbunden sein, wobei das Kabel im Falle eines Baggers entlang des Stiels bis zum Verbindungsbereich geführt sein kann. Bei einer drahtlosen Verbindung kann eine solche Verkabelung entfallen.

Alternativ kann es sich bei der Identifikationseinheit um ein mobiles Gerät, beispielsweise ein Smartphone oder Tablet, und bei dem Identifikationsmodul um ein auf einem solchen mobilen Gerät ablaufenden Programm handeln. Ebenfalls ist es denkbar, dass es sich bei der Identifikationseinheit um eine externe Rechnereinheit oder Cloud handelt. Das mobile Gerät oder die Cloud können drahtlos, beispielsweise per Mobilfunk, mit einer entsprechenden Sende- und Empfangseinheit kommunikativ verbunden sein, welche wiederum mit der zweiten Kommunikationseinheit drahtlos oder per Kabel verbunden oder in diese integriert ist.

In einer weiteren möglichen Ausführungsform ist ebenfalls vorgesehen, dass eine mit dem Arbeitsgerät verbundene Identifikationseinheit vorgesehen ist. Bei dieser Ausführungsform umfasst allerdings das Identifikationsmodul die Empfangseinheit, d.h. die erste Kommunikationseinheit kommuniziert direkt mit der Identifikationseinheit. Die zweite Kommunikationseinheit ist in diesem Fall eingerichtet, das zweite Beschleunigungssignal an die Identifikationseinheit kabelgebunden oder drahtlos zu übermitteln. Die in Bezug auf die vorherige Ausführungsform beschriebenen optionalen Ausgestaltungsmöglichkeiten gelten analog für diese Ausführungsform.

In einer weiteren möglichen Ausführungsform ist vorgesehen, dass die erste Kommunikationseinheit eingerichtet ist, ein Identifikationssignal bereitzustellen und an das Identifikationsmodul und/oder eine Steuerung des Arbeitsgeräts zu übermitteln.

Das Identifikationssignal kann einen Standort des Anbauwerkzeugs betreffen, welcher beispielsweise mittels eines Positionserfassungsmoduls (z.B. GPS-Modul) erfassbar sein kann. Alternativ oder zusätzlich kann das Identifikationssignal eine Abmessung oder mehrere Abmessungen bzw. eine Geometrie des Anbauwerkzeugs betreffen. Alternativ oder zusätzlich kann das Identifikationssignal einen Typ des Anbauwerkzeugs betreffen, d.h. das Anbauwerkzeug charakterisieren (z.B. Baggerlöffel, Mehrschalengreifer etc.). Alternativ oder zusätzlich kann das Identifikationssignal eine sonstige Eigenschaft des Anbauwerkzeugs wie beispielsweise ein Gewicht, einen Werkzeugparameter etc. betreffen. Es können auch Betriebsparameter übertragen werden.

Das Identifikationssignal kann vorzugsweise der Steuerung zur Verfügung gestellt werden, welche daraufhin den Betrieb des Arbeitsgeräts an das jeweils erkannte, angebaute Anbauwerkzeug anpasst. Da die durch das Identifikationssignal repräsentierten Daten sicherheitsrelevant sein können, ist es besonders wichtig, dass nur die Daten des tatsächlich angebauten Anbauwerkzeugs an die Steuerung übermittelt werden, was mithilfe des erfindungsgemäßen Systems gewährleistet ist.

In einer weiteren möglichen Ausführungsform ist vorgesehen, dass das Identifikationsmodul eingerichtet ist, beim Vergleich der ersten und zweiten Beschleunigungssignale eine oder mehrere der folgenden Informationen zu berücksichtigen:
- Eine Eigenschaft der ersten und/oder zweiten Beschleunigungssignale. Hierbei kann es sich vorzugsweise um die Signalstärken bzw. Amplituden der Beschleunigungssignale, insbesondere der ersten Beschleunigungssignale, handeln. Diese kann einen Hinweis auf die Entfernung des jeweiligen Anbauwerkzeugs zum Verbindungsbereich geben (je größer die Entfernung, desto kleiner die Signalstärke).
- Eine Eigenschaft des Identifikationssignals. Hierbei kann es sich vorzugsweise um die Signalstärke bzw. Amplitude des Identifikationssignals handeln.
- Einen momentanen Standort des Anbauwerkzeugs. Dieser kann mittels einer am Anbauwerkzeug angeordneten Standortbestimmungseinheit (z.B. GPS-Modul) bestimmbar sein.
- Eine Position bzw. Anordnung der ersten Kommunikationseinheit an einem Anbauwerkzeug. Auf Basis dieser Information kann genauer berechnet werden, welche Beschleunigungen am Anbauwerkzeug beim Kopplungsvorgang und während des Betriebs erwartet werden können und eine höhere Genauigkeit bei der Berechnung einer erwarteten Beschleunigung bzw. beim Vergleich mit der tatsächlich gemessenen Beschleunigung erzielt werden.
- Eine momentane Stellung und/oder ein momentaner Rüstzustand des Arbeitsgeräts. Diese(r) kann mittels mindestens eines Sensors des Arbeitsgeräts bestimmbar sein. Die Stellung kann sich beispielsweise auf die Position bzw. Orientierung eines Baggerstiels beziehen.
- Einen momentanen Kopplungszustand des Anbauwerkzeugs mit dem Verbindungsbereich des Arbeitsgeräts. Dieser kann mittels eines Kopplungssensors bestimmbar sein, welcher beispielsweise erfasst, dass ein Anbauwerkzeug an den Verbindungsbereich angekoppelt ist.

Dadurch ist es möglich, die Genauigkeit bzw. Zuverlässigkeit der Lokalisierung des angebauten Anbauwerkzeugs weiter zu erhöhen.

**In** einer weiteren möglichen Ausführungsform ist vorgesehen, dass das Identifikationsmodul eingerichtet ist, mehrere erste Beschleunigungssignale von ersten Kommunikationseinheiten mehrerer Anbauwerkzeuge zu empfangen und jedes dieser ersten Beschleunigungssignale mit einem zweiten Beschleunigungssignal (entweder mit einem einzigen zweiten Beschleunigungssignal als Referenz oder mit mehreren zweiten Beschleunigungssignalen) der zweiten Kommunikationseinheit zu vergleichen, um anhand der Vergleiche zu bestimmen, ob ein Anbauwerkzeug mit dem Arbeitsgerät verbunden ist und/oder welches der Anbauwerkzeuge mit dem Arbeitsgerät verbunden ist. Vorzugsweise kann die zweite Kommunikationseinheit Beschleunigungssignale von Anbauwerkzeugen innerhalb eines gewissen Empfangsradius von beispielsweise mehreren Metern empfangen.

In einer weiteren möglichen Ausführungsform ist vorgesehen, dass das Identifikationsmodul eingerichtet ist, bei der Bestimmung, ob ein Anbauwerkzeug mit dem Arbeitsgerät verbunden und/oder wenn ja, welches der Anbauwerkzeuge mit dem Arbeitsgerät verbunden ist, einen geringsten Unterschied zwischen einem ersten Beschleunigungssignal und einem zweiten Beschleunigungssignal zu berücksichtigen.

Der Unterschied kann sich auf verschiedene Eigenschaften der Beschleunigungssignale wie beispielsweise die Signalstärke bzw. Amplitude beziehen. Vorzugsweise bezieht sich der Unterschied auf die Beschleunigungen der betrachteten Anbauwerkzeuge und des Verbindungsbereichs. Mit anderen Worten wird dasjenige Anbauwerkzeug als angebaut erkannt (oder zumindest in Bezug auf eine Wahrscheinlichkeit, dass es sich hierbei um ein angebautes Werkzeug handelt, höher gewichtet), dessen Beschleunigung am meisten mit der gemessenen Beschleunigung des Verbindungsbereichs übereinstimmt, zum Beispiel die geringste Differenz aufweist.

Alternativ oder zusätzlich kann das Identifikationsmodul eingerichtet sein, bei besagter Bestimmung einen Unterschied in Form einer Differenz oder eines beliebig anderen Auswertungsalgorithmus des Signals zwischen einem zweiten Beschleunigungssignal und einer anhand des zweiten Beschleunigungssignals berechneten erwarteten Beschleunigung für ein Anbauwerkzeug zu berücksichtigen. Anhand der mittels des zweiten Beschleunigungssensors gemessenen Beschleunigung des Verbindungsbereichs wird also eine theoretisch erwartbare Beschleunigung für ein angebautes Anbauwerkzeug berechnet und mit der tatsächlich mittels des ersten Beschleunigungssensors gemessenen Beschleunigung des angebauten Anbauwerkzeugs verglichen. Hierbei können Daten zum Anbauwerkzeug, die durch die erste Kommunikationseinheit übermittelt werden (z.B. zur Geometrie des Werkzeugs), berücksichtigt werden. Ist die Abweichung zu hoch, wird das Anbauwerkzeug als nicht angebaut erkannt oder zumindest geringer gewichtet.

In einer weiteren möglichen Ausführungsform ist vorgesehen, dass mindestens zwei erste Kommunikationseinheiten vorgesehen sind, die mit unterschiedlichen miteinander und/oder mit dem Verbindungsbereich koppelbaren Anbauwerkzeugen verbunden sind, wobei das Identifikationsmodul eingerichtet ist, die ersten Beschleunigungssignale der mindestens zwei ersten Kommunikationseinheiten zu erhalten und miteinander und/oder mit dem zweiten Beschleunigungssignal zu vergleichen, um anhand des Vergleichs eine Anbaureihenfolge der Anbauwerkzeuge zu ermitteln. Beispielsweise kann es sich bei einem der Anbauwerkzeuge um einen Adapter oder eine Verlängerung handeln, an den / die wiederum ein anderes Anbauwerkzeug anbaubar ist.

Anhand der zuvor beschriebenen Kriterien kann nun ermittelt werden, welches der Anbauwerkzeuge sich näher am Verbindungsbereich befindet und dadurch die Anbaureihenfolge ermittelt werden. Beispielsweise kann bei einem Verschwenken eines Auslegers des Arbeitsgeräts das weiter außen angeordnete Anbauwerkzeug eine größere Beschleunigung erfahren als ein direkt am Verbindungsbereich Montiertes. Alternativ oder zusätzlich könnte die Signalstärke betrachtet werden, da das weiter außen angeordnete Anbauwerkzeug am Ort der zweiten Kommunikationseinheit eine geringere Signalstärke aufweist als das andere Anbauwerkzeug. Ebenfalls könnte anhand eines vorgegebenen bzw. angenommenen Rüstzustands der Anbauwerkzeuge die erwartbaren Beschleunigungen für die verschiedenen Anbauwerkzeuge an den verschiedenen Positionen berechnet und mit den gemessenen Beschleunigungswerten verglichen werden. Ist die Abweichung zu groß, kann die tatsächliche Anbaureihenfolge erkannt werden.

Die genaue Bestimmung der Anbau- bzw. Kopplungsreihenfolge aufgrund der Kinematik des Arbeitsgeräts erlaubt eine genaue Einstellung des Arbeitsgeräts bzw. von dessen Steuerung auf die angebauten Anbauwerkzeuge.

Das Vorgenannte gilt nicht nur für eine Anbaureihenfolge, sondern auch für die Stellung eines verstellbaren Anbauwerkzeugs. So könnte beispielsweise eine verstellbare Verlängerung als Anbauwerkzeug vorgesehen sein. Je nach Stellung können sich die ersten Beschleunigungssignale bzgl. der Verlängerung oder eines daran angebauten weiteren Anbauwerkzeugs ändern. Somit könnte durch einen Vergleich von gemessenen und berechneten Werten eine falsche Einbauposition eines Anbauwerkzeugs erkannt werden. Hier könnte vorgesehen sein, dass eine mit dem Identifikationsmodul verbundene Steuerung eine Warnung ausgibt (z.B. optisch und/oder akustisch) und/oder in die Steuerung des Arbeitsgeräts eingreift.

In einer weiteren Ausführungsform sind mindestens zwei erste Kommunikationseinheiten auf jeweils unterschiedlichen Anbauwerkzeugen vorgesehen, die zusätzlich untereinander kommunizieren können. Dadurch können bei der Ermittlung der Kopplung zusätzliche Informationen herangezogen werden. Die Werkzeuge können zusätzlich ihren Kopplungsstatus untereinander austauschen. Sie können darüber hinaus speichern, in welcher Konfiguration sie montiert sind, beispielsweise, wenn zwei Werkzeuge zusammen abgelegt wurden.

In einer weiteren möglichen Ausführungsform ist vorgesehen, dass das Identifikationsmodul eingerichtet ist, auf Grundlage des zweiten Beschleunigungssignals eine erwartete Beschleunigung für ein Anbauwerkzeug zu berechnen und mit dem ersten Beschleunigungssignal der ersten Kommunikationseinheit des Anbauwerkzeugs zu vergleichen, um anhand des Vergleichs zu erkennen, ob das Anbauwerkzeug mit dem Arbeitsgerät verbunden ist und/oder eine Plausibilitätsbewertung für einen angenommenen Rüstzustand des Arbeitsgeräts durchzuführen. Die Plausibilitätsbewertung kann sich auf durch die erste Kommunikationseinheit übermittelte Werte zum Anbaugerät beziehen, beispielsweise zum Typ, zur Abmessung etc. (Identifikationssignal).

Durch die Plausibilitätsbewertung kann beispielsweise bewertet werden, ob die übermittelten Maße einer Verlängerung (bei einem Bagger z.B. einer Stielverlängerung) von den aus den gemessenen Daten abgeleiteten Werten abweicht. Die Plausibilitätsbewertung kann sich nicht nur auf den Rüstzustand bzw. die Stellung / Konfiguration eines oder mehrerer angebauter Werkzeuge beziehen, sondern auch auf das Arbeitsgerät selbst. Dadurch wird die Betriebssicherheit des Arbeitsgeräts erhöht. Die Plausibilitätsbewertung erfolgt vorzugsweise automatisch, sodass der Bediener hier nichts veranlassen muss.

Die vorliegende Erfindung betrifft weiterhin ein Set umfassend ein Arbeitsgerät, insbesondere einen Bagger, weiter insbesondere Hydraulikbagger, und mindestens ein Anbauwerkzeug, die ein erfindungsgemäßes System umfassen. Das Arbeitsgerät umfasst vorzugsweise eine Steuerung, die eingerichtet ist, ein Identifikationssignal betreffend einen Standort und/oder eine Abmessung und/oder den Typ und/oder eine sonstige Eigenschaft des Anbauwerkzeugs zu erhalten und den Betrieb bzw. die Steuerung des Arbeitsgeräts auf Grundlage des Identifikationssignals anzupassen.

Über den Vergleich der Beschleunigungen wird sichergestellt, dass das der Steuerung des Arbeitsgeräts zugrundeliegende bzw. diese beeinflussende Identifikationssignal auch wirklich vom angebauten Anbauwerkzeug stammt und nicht von einem anderen Werkzeug in Empfangsreichweite. Über eine ggf. vorgesehene Plausibilitätsbewertung wie oben beschrieben lassen sich die Daten, die sich aus dem Identifikationssignal ergeben, mit gemessenen Werten vergleichen und auf Korrektheit bzw. Plausibilität überprüfen.

Dabei ergeben sich insgesamt dieselben Vorteile und Eigenschaften wie für das erfindungsgemäße System, weshalb an dieser Stelle auf eine wiederholende Beschreibung verzichtet wird.

Die vorliegende Erfindung betrifft weiterhin ein Verfahren zur Lokalisierung eines Anbauwerkzeugs für ein Arbeitsgerät mittels eines erfindungsgemäßen Systems mit den Schritten:
- Erfassen einer momentanen Beschleunigung mindestens eines Anbauwerkzeugs mittels eines ersten Beschleunigungssensors einer mit dem Anbauwerkzeug verbundenen ersten Kommunikationseinheit und Bereitstellen eines ersten Beschleunigungssignals,
- Erfassen einer momentanen Beschleunigung des Verbindungsbereichs des Arbeitsgeräts mittels des zweiten Beschleunigungssensors der zweiten Kommunikationseinheit und Bereitstellen eines zweiten Beschleunigungssignals,
- Übermitteln des ersten und des zweiten Beschleunigungssignals an das Identifikationsmodul, und
- Vergleichen des ersten und des zweiten Beschleunigungssignals mit geeigneten Algorithmen, um das Anbauwerkzeug zu lokalisieren, insbesondere um zu erkennen, ob das Anbauwerkzeug mit dem Arbeitsgerät verbunden ist (bzw. bei mehreren in Frage kommenden Anbauwerkzeugen, welches davon am Verbindungsbereich angebaut ist).

Dabei ergeben sich offensichtlich dieselben Vorteile und Eigenschaften wie für das erfindungsgemäße System, weshalb an dieser Stelle auf eine wiederholende Beschreibung weitgehend verzichtet wird. Die obigen Ausführungen hinsichtlich der möglichen Ausgestaltungen der verschiedenen Komponenten des Systems und deren Interaktionen gelten daher entsprechend.

Vorzugsweise findet während der Messung der momentanen Beschleunigung des Anbauwerkzeugs mittels des zweiten Beschleunigungssensors, welche dem vergleich zugrunde liegt, eine Bewegung des angebauten Anbauwerkzeugs statt, sodass das entsprechende erste Beschleunigungssignal eine Beschleunigung größer Null repräsentiert.

In einer möglichen Ausführungsform des Verfahrens ist vorgesehen, dass mindestens zwei erste Kommunikationseinheiten vorgesehen sind, die mit unterschiedlichen Anbauwerkzeugen verbunden sind, wobei die Anbauwerkzeuge miteinander und/oder mit dem Verbindungsbereich koppelbar sind. Auf Grundlage des zweiten Beschleunigungssignals werden theoretisch erwartete Beschleunigungen mindestens zweier Anbauwerkzeuge berechnet und mit den ersten Beschleunigungssignalen der ersten Kommunikationseinheiten der Anbauwerkzeuge verglichen, um zu erkennen, ob eines oder mehrere der Anbauwerkzeuge mit dem Arbeitsgerät verbunden sind und/oder um eine Plausibilitätsbewertung für einen angenommenen oder durch die erste Kommunikationseinheit übermittelten Rüstzustand des Arbeitsgeräts durchzuführen.

In einer weiteren möglichen Ausführungsform des Verfahrens ist vorgesehen, für die Plausibilitätsbewertung Informationen betreffend einen Standort und/oder eine Abmessung und/oder einen Typ und/oder eine sonstige Eigenschaft der Anbauwerkzeuge zu berücksichtigen, welche vorzugsweise durch die jeweiligen ersten Kommunikationseinheiten an das Identifikationsmodul übermittelt werden. Diese werden insbesondere als Identifikationssignal übermittelt, wobei letzteres mehrere Informationen bzw. mehrere Signale umfassen kann.

In einer weiteren möglichen Ausführungsform des Verfahrens ist vorgesehen, ein Identifikationssignal betreffend einen Standort und/oder eine Abmessung und/oder den Typ und/oder eine sonstige Eigenschaft eines Anbauwerkzeugs von der zugeordneten ersten Kommunikationseinheit bereitgestellt wird und das Identifikationssignal an eine Steuerung des Arbeitsgeräts übermittelt wird (entweder direkt oder über die zweite Kommunikationseinheit), welche den Betrieb des Arbeitsgeräts auf Grundlage des Identifikationssignals anpasst.

Weitere Merkmale, Einzelheiten und Vorteile der Erfindung ergeben sich aus den nachfolgend anhand der Figuren erläuterten Ausführungsbeispielen. Es zeigen:
- Figur 1:: eine seitliche Ansicht eines Arbeitsgeräts mit angebautem Anbauwerkzeug gemäß einem Ausführungsbeispiel der Erfindung;
- Figur 2:: eine seitliche Ansicht von drei Anbauwerkzeugen mit schematisch dargestellten Sendebereichen der ersten Kommunikationseinrichtungen;
- Figur 3:: den Verbindungsbereich eines Arbeitsgeräts beim Aufnehmen verschiedener Anbauwerkzeuge in seitlichen Ansichten;
- Figur 4:: eine seitliche Ansicht eines Arbeitsgeräts mit zwei angebauten Anbauwerkzeugen gemäß einem weiteren Ausführungsbeispiel;
- Figur 5:: eine seitliche Ansicht des Verbindungsbereichs mit zwei angebauten Anbauwerkzeugen gemäß einem weiteren Ausführungsbeispiel;
- Figur 6:: die Ansicht gemäß Figur 4, wobei auf die verschiedenen Teile wirkende Beschleunigungskräfte eingezeichnet sind; und
- Figur 7:: ein schematisches Schaubild der verschiedenen Komponenten des erfindungsgemäßen Systems gemäß einem Ausführungsbeispiel.

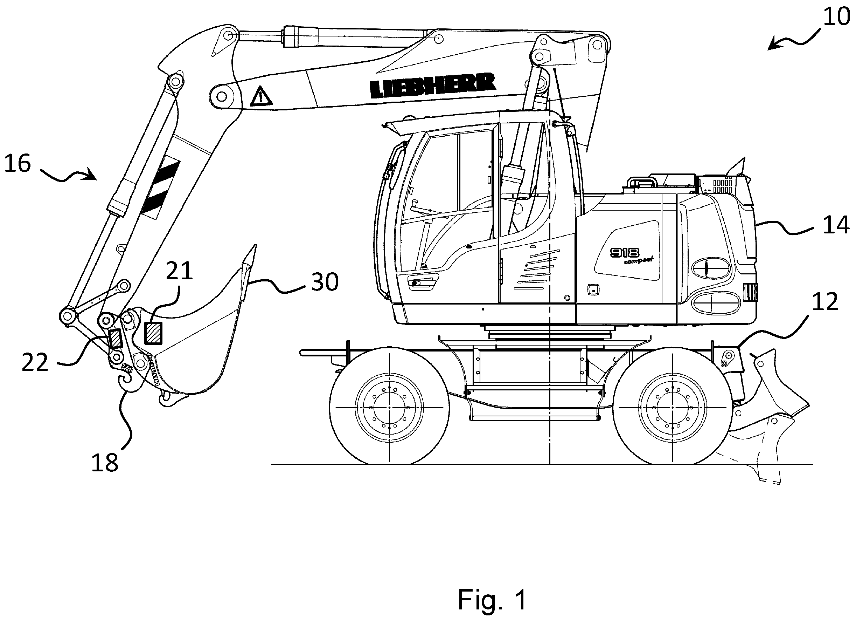

In der Figur 1 ist ein erstes Ausführungsbeispiel eines mit dem erfindungsgemäßen System ausgestatteten Arbeitsgeräts 10 mit angebautem Anbauwerkzeug 30 in einer seitlichen Ansicht dargestellt. Bei dem hier gezeigten Ausführungsbeispiel handelt es sich um einen Hydraulikbagger 10 mit einem Baggerlöffel 30 als Anbauwerkzeug. Der Bagger 10 umfasst einen fahrbaren Unterwagen 12, einen drehbar auf dem Unterwagen 12 gelagerten Oberwagen 14 sowie einen schwenkbaren Baggerausleger 16, an dessen Ende (Stielende) ein als schwenkbarer Schnellwechsler ausgebildeter Verbindungsbereich 18 angeordnet ist. Der Schnellwechsler 18 ermöglicht in an sich bekannter Weise ein schnelles und unkompliziertes An- und Abbauen bzw. Wechseln von verschiedenen Anbauwerkzeugen 30.

Der Hydraulikbagger 10 und der Baggerlöffel 30 (sowie ggf. weitere zur Verfügung stehende, in der Fig. 1 aber nicht dargestellte Anbauwerkzeuge 30) sind mit einem erfindungsgemäßen Werkzeugkommunikations- und -lokalisierungssystem ausgestattet. Das System umfasst eine am Baggerlöffel 30 angeordnete erste Kommunikationseinheit 21 (im Folgenden auch als Werkzeug-Modul 21 bezeichnet), eine am Schnellwechsler 18 angeordnete zweite Kommunikationseinheit 22 (im Folgenden auch als Empfänger-Modul 22 bezeichnet) sowie eine am / im Grundgerät angebrachte, hier aber nicht weiter dargestellte Identifizierungseinheit 24. Letzteres weist eine Verbindung zur Fahrzeugsteuerung 26 auf.

Die verschiedenen Module (d.h. die ersten und zweiten Kommunikationseinheiten 21, 22 und die Identifikationseinheit 24) kommunizieren über Funk miteinander und können Daten austauschen. Vorzugsweise kommunizieren die ersten und zweiten Kommunikationseinheiten 21, 22 mittels Bluetooth (BLE). Die Signale der ersten Kommunikationseinheit 21 werden dabei an die zweite Kommunikationseinheit 22 übermittelt, welche wiederum diese Signale zusammen mit ggf. von der zweiten Kommunikationseinheit 22 selbst bereitgestellten Signalen an die Identifikationseinheit 24 drahtlos übermittelt. Über diesen Weg ist es also möglich, dass Signale von der ersten Kommunikationseinheit 21 über die Identifikationseinheit 24 an die Fahrzeugsteuerung 26 übermittelt werden.

Die ersten und zweiten Kommunikationseinheiten 21, 22 sind zusätzlich mit Beschleunigungssensoren ausgestattet (nicht dargestellt), welche die Beschleunigungen der entsprechenden Teile (also des Schnellwechslers 18 und des Baggerlöffels 30) an den Orten der Kommunikationseinheiten 21, 22 messen und entsprechende Beschleunigungssignale bereitstellen. Diese Beschleunigungssignale laufen in der Identifikationseinheit 24 zusammen und werden dort von einer entsprechenden Software (Identifikationsmodul) analysiert.

Die ersten und zweiten Kommunikationseinheiten 21, 22 können entsprechende Prozessoren, Speicherbausteine sowie Sende- und/oder Empfangseinheiten umfassen.

Neben den Beschleunigungssignalen (erste Beschleunigungssignale) kann die erste Kommunikationseinheit 21 weitere Daten betreffend das zugehörige Anbauwerkzeug 30 bereitstellen (z.B. als sogenannte Identifikationssignale) und an die zweite Kommunikationseinheit 22 und somit an die Identifikationseinheit 24 übermitteln. Bei diesen Daten zum Werkzeug 30 kann es sich beispielsweise um Identifikationsdaten, Geometriedaten und/oder Betriebsdaten handeln, die der Fahrzeugsteuerung 26 zur Verfügung gestellt werden, welche den Betrieb des Hydraulikbaggers 10 dann auf das jeweils angebaute Anbauwerkzeug 30 anpassen bzw. einstellen kann.

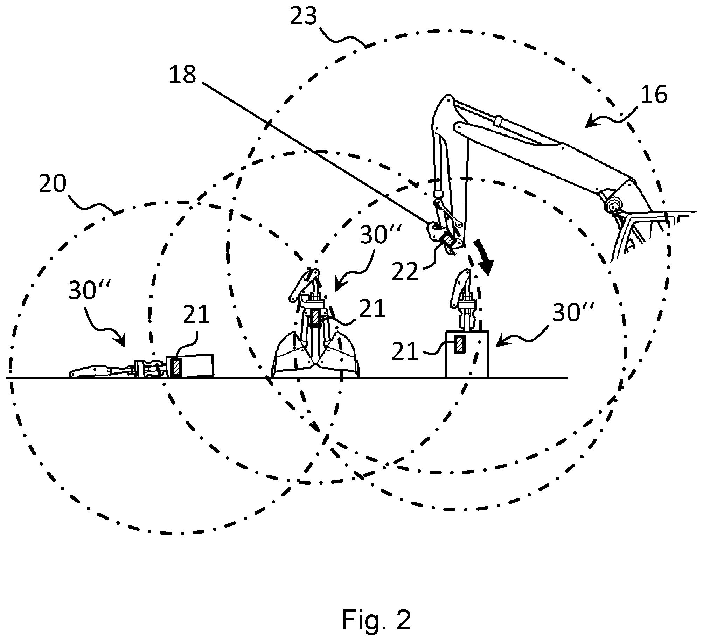

Die Figur 2 zeigt in einer seitlichen Ansicht drei als Mehrschalengreifer 30" ausgebildete Anbauwerkzeuge sowie den Ausleger 16 eines Hydraulikbaggers 10.

Die drahtlose Kopplung der Kommunikationseinheiten 21, 22 erfolgt automatisch. Da die ersten Kommunikationseinheiten 21 einen gewissen Sendebereich 20 von bis zu mehreren Zentimetern oder Metern aufweisen können (in der Figur 2 als Kreise 20 dargestellt) und auch die zweite Kommunikationseinheit 22 einen gewissen Empfangsbereich 23 aufweist (in der Figur 2 als Kreis 23 dargestellt), kann es durch die drahtlose Kommunikation bei mehreren nahe beieinander platzierten Anbauwerkzeugen 30" dazu kommen, dass die zweite Kommunikationseinheit 22 mit mehreren ersten Kommunikationseinheiten 21 gleichzeitig gekoppelt ist bzw. deren Signale empfängt. Jede der entsprechenden ersten Kommunikationseinheiten 21 der verschiedenen Anbauwerkzeuge 30" übermittelt nun ggf. unterschiedliche Werkzeugdaten an die zweite Kommunikationseinheit 22.

Da diese ausgetauschten Daten mitunter sicherheitsrelevant sein können, ist es erforderlich, dass nach einem Anbau korrekt zugeordnet wird, welches Werkzeug 30" am Grundgerät bzw. Verbindungsbereich 18 angekoppelt ist.

Das erfindungsgemäße System sorgt nun dafür, dass eindeutig und sicher identifiziert werden kann, welches Anbauwerkzeug 30, 30', 30" mit dem Grundgerät gekoppelt ist.

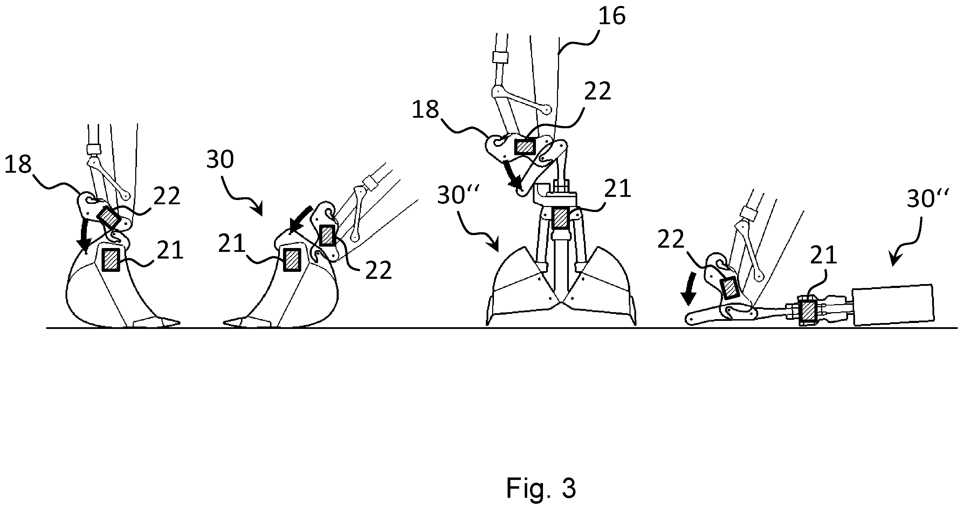

Die Figur 3 zeigt in einer seitlichen Ansicht mehrere Beispiele von möglichen Anbauwerkzeugen 30, 30" (hier Baggerlöffel 30 und Zweischalengreifer 30"), die mit entsprechenden ersten Kommunikationseinheiten 21 ausgestattet sind. All diese Werkzeuge 30, 30" weisen entsprechende Verbindungsmittel auf, über die sie mit dem Schnellwechsler 18 verbunden bzw. von diesem gegriffen werden können.

Die zweite Kommunikationseinheit 22 kann seitlich am Schnellwechsler 18 angeordnet sein, wie in den hier gezeigten Ausführungsbeispielen dargestellt. Alternativ sind jedoch auch andere Anordnungen vorstellbar, beispielsweise mittig am / im Verbindungsbereich oder an einer Innenseite des Schnellwechslers 18. Ebenfalls ist es denkbar, dass die zweite Kommunikationseinheit 22 nicht direkt am Schnellwechsler 18, sondern an einer anderen Position am Ausleger 16 bzw. Stiel angebracht ist.

Auch die hier dargestellten Anbauwerkzeuge 30, 30', 30" zeigen nur beispielhaft und schematisch denkbare Anordnungen der ersten Kommunikationseinheiten 21. Bei einem Baggerlöffel 30 kann diese, wie gezeigt, an einer der Seitenwände angebracht sein, wobei jedoch beispielsweise auch eine Anordnung an der Oberseite bzw. der Rückwand denkbar ist. Bei Mehrschalengreifern 30" kann die erste Kommunikationseinheit 21 beispielsweise an der zentralen Mittelsäule (siehe Figur 3), im Bereich der Drehverbindung oder des Verbindungsbereichs mit dem Schnellwechsler 18, oder ebenfalls an den Schalen selbst (siehe Figur 3, ganz rechts) angebracht sein.

Das Empfänger-Modul 22 am Bagger 10 empfängt Signale der im Empfangsradius 23 liegenden Werkzeug-Module 21. Wird ein Anbauwerkzeug 30, 30', 30" angekoppelt, werden die empfangenen Signale ausgewertet, um zu identifizieren, welches der im Radius befindlichen Anbauwerkzeuge 30, 30', 30" das Aufgenommene ist.

Dabei werden die ersten Beschleunigungssignale der verschiedenen Werkzeug-Module 21 mit dem vom Empfänger-Modul 22 bereitgestellten zweiten Beschleunigungssignal mittels geeigneter Auswertungsmethoden durch die Identifikationseinheit 24 verglichen. Wird nun der Baggerausleger 16 bewegt, so wirken sowohl auf den Schnellwechsler 18 als auch auf das angebaute Werkzeug 30, 30', 30" Beschleunigungskräfte, die von der Anbaukonfiguration (Rüstzustand) und der genauen Position der ersten und zweiten Kommunikationseinheiten 21, 22 abhängen. Weitere im Empfangsbereich 23 der zweiten Kommunikationseinheit 22 befindliche Anbauwerkzeuge 30, 30', 30" erfahren dagegen keine Beschleunigung. Daher ist eine Identifizierung des angebauten Werkzeugs 30, 30', 30" über einen Abgleich der gemessenen Beschleunigungen möglich.

Zur korrekten Identifikation bzw. Zuordnung können neben den Beschleunigungssignalen weitere Signale ergänzend hinzugezogen werden:
- Die Stärke eines Kommunikationssignals (erstes Beschleunigungssignal und/oder Identifikationssignal),
- Der Standort des Werkzeugs 30, 30', 30",
- Informationen des Schnellwechslers 18 über den Kopplungszustand,
- Informationen zur Stellung des Baggers 10.

Bei der Auswertung der Beschleunigungssignale können verschiedene Signalverarbeitungsverfahren zum Einsatz kommen. Beispielsweise ist denkbar, dass die Signale geglättet und/oder über einen gewissen Zeitraum gemittelt werden, bevor sie miteinander verglichen werden.

Ebenfalls ist vorstellbar, dass die Beschleunigungen mittels der Beschleunigungssensoren nur nach dem Aufnehmen eines Anbauwerkzeugs und/oder nur für einen begrenzten Zeitraum und/oder nur so lange, bis eine eindeutige Zuordnung erfolgt ist durchgeführt wird. Alternativ kann vorgesehen sein, dass die Beschleunigungen während des gesamten Betriebs des Arbeitsgeräts gemessen werden (z.B. in regelmäßigen Abständen oder kontinuierlich), um im Betrieb durchgehend entsprechende Daten der Steuerung und/oder dem Identifikationsmodul zur Verfügung zu stellen (z.B. für eine regelmäßig erfolgende Plausibilitätsprüfung oder Überwachung)

Geeignete Methoden zur Auswertung der Beschleunigungssignale können folgende Schritte beinhalten:
- Das Werkzeug-Modul 21 mit der geringsten Differenz in der Beschleunigung zum Empfangs-Modul 22 wird als das gekoppelte Modul 21 erkannt.
- Auf Basis der Bewegung des Empfangs-Moduls 22 wird die erwartete Bewegung des Werkzeug-Moduls 21 bei der Kopplung vorausberechnet und diese berechnete Beschleunigung mit den empfangenen Beschleunigungen der umliegenden, im Empfangsbereich 23 befindlichen Werkzeug-Module 21 verglichen. Das Werkzeug-Modul 21 mit der geringsten Differenz zum berechneten Wert wird als das gekoppelte Modul 21 erkannt.
- Bei Funkkontakt zwischen einem Werkzeug- und dem Empfangsmodul 21, 22 werden vom Anbauwerkzeug 30, 30', 30" Informationen zur Positionierung des Werkzeug-Moduls 21 am Werkzeug 30, 30', 30" empfangen. Auf Basis dieser Informationen kann genauer berechnet werden, welche Beschleunigungen am Werkzeug 30, 30', 30" beim Kopplungsvorgang erwartet werden und eine höhere Genauigkeit beim Vergleich der empfangenen und berechneten Beschleunigungen erzielt werden.

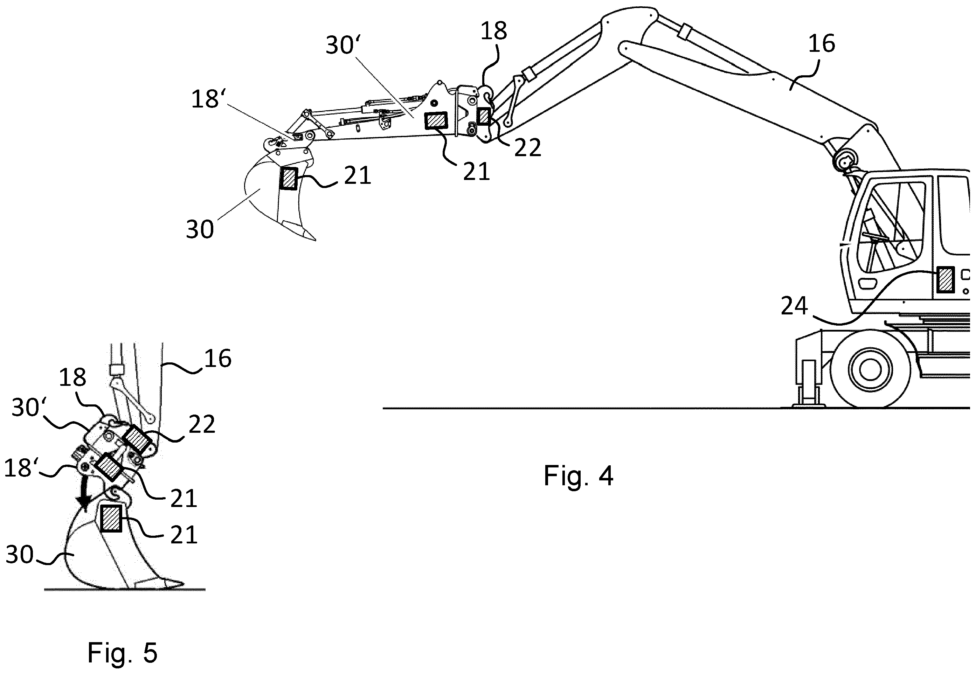

Die erfindungsgemäße Methode kann ebenfalls angewandt werden, wenn mehrere Werkzeuge 30, 30', 30" gemeinsam aufgenommen wurden. **In** der Figur 4 ist beispielsweise ein Ausführungsbeispiel dargestellt, in der eine Stielverlängerung 30' an den Schnellwechsler 18 des Auslegers 16 angebaut ist, welche an ihrem dem Ausleger 16 abgewandten Ende einen eigenen Schnellwechsler 18' aufweist, an den wiederum ein Baggerlöffel 30 angebaut ist. Die Figur 5 zeigt ein weiteres Ausführungsbeispiel mit einem kürzeren Adapterstück 18' zwischen Ausleger 16 und Baggerlöffel 30.

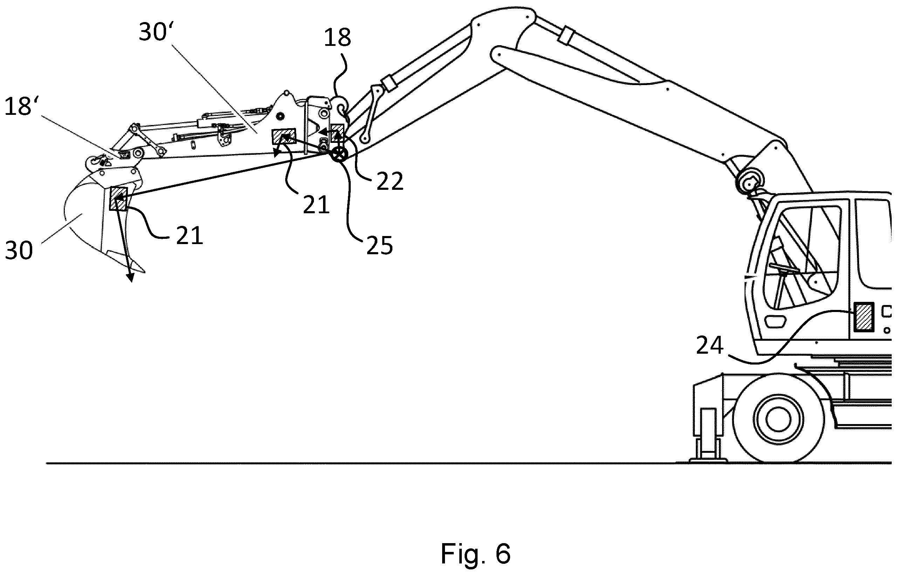

Auf die beiden Werkzeug-Module 21 der beiden angebauten Werkzeuge 30, 30' wirken bei einer Bewegung des Auslegers 16 (und auch bei einer Bewegung lediglich eines oder beider Anbauwerkzeuge 30, 30') unterschiedliche Beschleunigungen, welche von der Geometrie und der Kinematik der Anbauwerkzeuge 30, 30' abhängen. Dies ist in der Figur 6 durch die eingezeichneten Pfeile dargestellt, die zwischen dem Drehgelenk 25 dss Schnellwechslers 18 und den jeweiligen ersten und zweiten Kommunikationseinheiten 21, 22 eingezeichnet sind. Die Beschleunigungen an den jeweiligen Befestigungspunkten der Kommunikationseinheiten 21, 22 setzen sich jeweils zusammen aus den Beschleunigungskomponenten zwischen Drehgelenk 25 und Kommunikationseinheit 21, 22 und senkrecht dazu stehenden Komponenten. Bei einem Verschwenken des Schnellwechslers 18 verschwenken die Stielverlängerung 30' und der Baggerlöffel 30 gemeinsam, wobei letzterer weiter vom Drehpunkt 25 entfernt ist. Dementsprechend wirken auf den Baggerlöffel 30 größere Beschleunigungskräfte als auf die Stielverlängerung 30'.

Auf Basis der jeweiligen Beschleunigungen kann bei mehreren angekoppelten Werkzeugen 30, 30' somit zusätzlich deren Anbaureihenfolge ermittelt werden, da die Beschleunigungen sich auf Basis der Kinematik des Baggers 10 und der Werkzeuge 30, 30', 30" unterscheiden. Die korrekte Bestimmung der Kopplungsreihenfolge erlaubt eine genaue Einstellung des Baggers 10 auf die angehängten Werkzeuge 30, 30', 30".

Durch einen Abgleich der Beschleunigungen mit theoretischen, berechneten Beschleunigungen können zudem Plausibilitätsbewertungen durchgeführt werden. Dadurch kann bewertet werden, ob die übermittelten Maße einer Stielverlängerung 30' (also die Abmessungen, die z.B. mit den Identifikationssignalen der ersten Kommunikationseinheit 21 übermittelt werden) von den tatsächlichen Abmessungen abweichen, indem die gemessenen mit den gemäß den übermittelten Daten erwarteten Beschleunigungen verglichen werden.

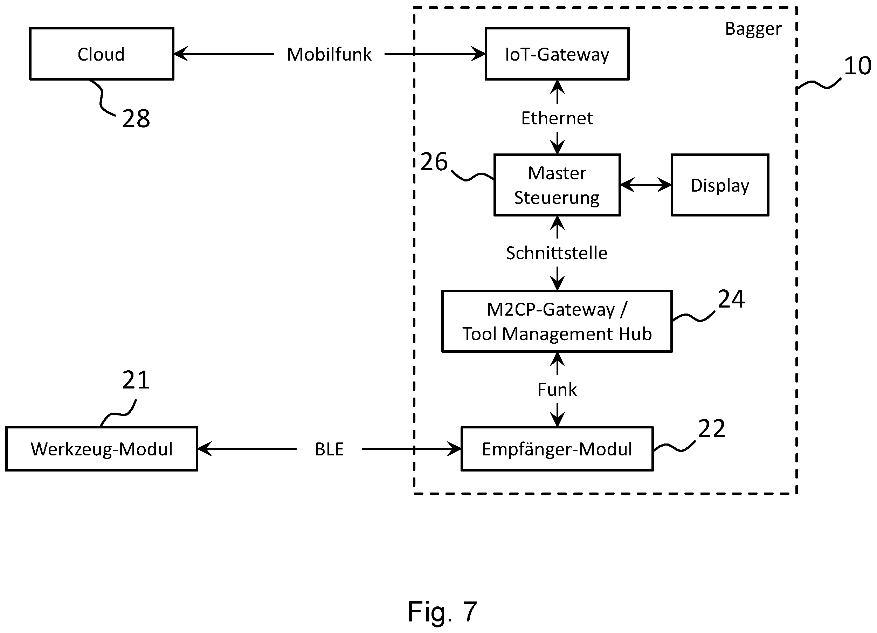

Die Figur 7 zeigt ein schematisches Schaubild der verschiedenen Komponenten des erfindungsgemäßen Systems gemäß einem Ausführungsbeispiel. Das mit einem Anbauwerkzeug 30, 30', 30" verbundene Werkzeug-Modul 21 kommuniziert mit dem Empfänger-Modul 22 am Bagger 10 über BLE. Die Kommunikation zwischen Empfänger-Modul 22 und der zentral im Bagger 10 angeordneten Identifikationseinheit 24 erfolgt per Funk, d.h. die Datenübertragung kann über einen anderen Funkstandard als BLE erfolgen. Die Identifikationseinheit 24 ist über eine entsprechende Schnittstelle mit der Fahrzeugsteuerung 26 verbunden, sodass Daten ausgetauscht werden können.

Die Fahrzeugsteuerung 26 ist wiederum über ein Kommunikationsmodul (hier: IoT-Gateway) per Mobilfunk mit einer Cloud 28 verbunden. Zwischen der Cloud 28 und der Fahrzeugsteuerung 26 bzw. der Identifikationseinheit 24 können also Daten ausgetauscht werden (beispielsweise Informationen aus der Cloud 28 abgerufen oder Daten in dieser abgelegt werden).

### Bezugszeichenliste:

- 10: Bagger
- 12: Unterwagen
- 14: Oberwagen
- 16: Ausleger
- 18: Verbindungsbereich (Schnellwechsler)
- 18': Verbindungsbereich (Schnellwechsler)
- 20: Sendebereich
- 21: Erste Kommunikationseinheit
- 22: Zweite Kommunikationseinheit
- 23: Empfangsbereich
- 24: Identifikationseinheit
- 25: Drehgelenk
- 26: Steuerung
- 28: Cloud
- 30: Anbauwerkzeug
- 30': Anbauwerkzeug
- 30": Anbauwerkzeug

## Patentansprüche

1. System zur Lokalisierung eines Anbauwerkzeugs (30) für ein Arbeitsgerät (10), umfassend:
- eine mit einem Anbauwerkzeug (30) verbindbare erste Kommunikationseinheit (21) mit einem ersten Beschleunigungssensor, welche eingerichtet ist, ein erstes Beschleunigungssignal betreffend eine momentane Beschleunigung des Anbauwerkzeugs (30) bereitzustellen,
- eine mit dem Arbeitsgerät (10) im Bereich eines Verbindungsbereichs (18) für das Anbauwerkzeug (30) verbindbare zweite Kommunikationseinheit (22) mit einem zweiten Beschleunigungssensor, welche eingerichtet ist, ein zweites Beschleunigungssignal betreffend eine momentane Beschleunigung des Verbindungsbereichs (18) bereitzustellen, und
- ein Identifikationsmodul, welches mit der ersten und/oder zweiten Kommunikationseinheit (21, 22) gekoppelt und eingerichtet ist, die ersten und zweiten Beschleunigungssignale zu erhalten und mittels geeigneter Auswertungsmethoden miteinander zu vergleichen, um anhand dieses Vergleichs das Anbauwerkzeug dem Arbeitsgerät zuzuordnen.

2. System nach Anspruch 1, wobei die erste Kommunikationseinheit (21) eingerichtet ist, das erste Beschleunigungssignal an eine Empfangseinheit drahtlos zu übermitteln, wobei die Empfangseinheit vorzugsweise eingerichtet ist, Signale innerhalb eines begrenzten Empfangsradius zu empfangen.

3. System nach Anspruch 2, wobei die zweite Kommunikationseinheit (22) die Empfangseinheit umfasst und eingerichtet ist, das erste und das zweite Beschleunigungssignal dem Identifikationsmodul bereitzustellen, wobei die zweite Kommunikationseinheit (22) das Identifikationsmodul umfasst oder eine mit dem Arbeitsgerät (10) verbundene Identifikationseinheit (24) vorgesehen ist, welche das Identifikationsmodul umfasst und eingerichtet ist, das erste und das zweite Beschleunigungssignal von der zweiten Kommunikationseinheit (22) kabelgebunden oder drahtlos zu empfangen.

4. System nach Anspruch 2, wobei eine mit dem Arbeitsgerät (10) verbindbare Identifikationseinheit (24) vorgesehen ist, welche das Identifikationsmodul und die Empfangseinheit umfasst, wobei die zweite Kommunikationseinheit (22) eingerichtet ist, das zweite Beschleunigungssignal an die Identifikationseinheit (24) kabelgebunden oder drahtlos zu übermitteln.

5. System nach einem der vorhergehenden Ansprüche, wobei die erste Kommunikationseinheit (21) eingerichtet ist, ein Identifikationssignal betreffend einen Standort und/oder eine Abmessung und/oder den Typ und/oder eine sonstige Eigenschaft des Anbauwerkzeugs (30) bereitzustellen und an das Identifikationsmodul und/oder eine Steuerung (26) des Arbeitsgeräts (10) zu übermitteln.

6. System nach einem der vorhergehenden Ansprüche, wobei das Identifikationsmodul eingerichtet ist, beim Vergleich der ersten und zweiten Beschleunigungssignale eine oder mehrere der folgenden Informationen zu berücksichtigen:
- eine Eigenschaft, insbesondere Signalstärke, der Funkverbindung der ersten Kommunikationseinheit,
- einen momentanen Standort des Anbauwerkzeugs (30), welcher vorzugsweise mittels einer am Anbauwerkzeug (30) angeordneten Standortbestimmungseinheit bestimmbar ist,
- eine Position der ersten Kommunikationseinheit (21) an einem Anbauwerkzeug (30),
- eine momentane Stellung des Arbeitsgeräts (10), welche vorzugsweise mittels mindestens eines Sensors bestimmbar ist,
- einen momentanen Kopplungszustand des Anbauwerkzeugs (30) mit dem Verbindungsbereich des Arbeitsgeräts (10), welcher vorzugsweise mittels eines Kopplungssensors bestimmbar ist.

7. System nach einem der vorhergehenden Ansprüche, wobei das Identifikationsmodul eingerichtet ist, erste Beschleunigungssignale von ersten Kommunikationseinheiten (21) mehrerer Anbauwerkzeuge (30) zu empfangen und jedes dieser ersten Beschleunigungssignale mit einem zweiten Beschleunigungssignal der zweiten Kommunikationseinheit (22) zu vergleichen, um anhand der Vergleiche zu bestimmen, ob ein Anbauwerkzeug (30) und/oder welches der Anbauwerkzeuge (30) mit dem Arbeitsgerät (10) verbunden ist.

8. System nach Anspruch 7, wobei das Identifikationsmodul eingerichtet ist, bei der Bestimmung, ob ein und/oder welches der Anbauwerkzeuge (30) mit dem Arbeitsgerät (10) verbunden ist, eines oder beide der folgenden Kriterien zu berücksichtigen:
- einen Unterschied zwischen einem ersten und einem zweiten Beschleunigungssignal,
- einen Unterschied zwischen einem zweiten Beschleunigungssignal und einer anhand des zweiten Beschleunigungssignals berechneten erwarteten Beschleunigung für ein Anbauwerkzeug (30).

9. System nach einem der vorhergehenden Ansprüche, wobei mindestens zwei erste Kommunikationseinheiten (21) vorgesehen sind, die mit unterschiedlichen miteinander und/oder mit dem Verbindungsbereich (18) koppelbaren Anbauwerkzeugen (30) verbindbar sind, wobei das Identifikationsmodul eingerichtet ist, die ersten Beschleunigungssignale der mindestens zwei ersten Kommunikationseinheiten (21) zu erhalten und miteinander und/oder mit dem zweiten Beschleunigungssignal zu vergleichen, um anhand des Vergleichs eine Anbaureihenfolge der Anbauwerkzeuge (30) zu ermitteln.

10. System nach einem der vorhergehenden Ansprüche, wobei mindestens zwei erste Kommunikationseinheiten (21) mit jeweils unterschiedlichen Anbauwerkzeugen verbindbar sind, die zusätzlich untereinander kommunizieren.

11. System nach einem der vorhergehenden Ansprüche, wobei das Identifikationsmodul eingerichtet ist, auf Grundlage des zweiten Beschleunigungssignals eine erwartete Beschleunigung für ein Anbauwerkzeug (30) zu berechnen und mit dem ersten Beschleunigungssignal der ersten Kommunikationseinheit (21) des Anbauwerkzeugs (30) zu vergleichen, um anhand des Vergleichs zu erkennen, ob das Anbauwerkzeug (30) mit dem Arbeitsgerät (10) verbunden ist und/oder eine Plausibilitätsbewertung für einen angenommenen Rüstzustand des Arbeitsgeräts (10) durchzuführen.

12. Set aus einem Arbeitsgerät (10), insbesondere Hydraulikbagger, mindestens einem Anbauwerkzeug (30) und einem System nach einem der vorhergehenden Ansprüche, wobei die erste Kommunikationseinheit (21) mit dem Anbauwerkzeug (30) und die zweite Kommunikationseinheit (22) mit dem Arbeitsgerät (10) verbunden ist, wobei das Arbeitsgerät (10) vorzugsweise eine Steuerung (26) umfasst, welche eingerichtet ist, ein Identifikationssignal betreffend einen Standort und/oder eine Abmessung und/oder den Typ und/oder sonstige Eigenschaften des Anbauwerkzeugs (30) zu erhalten und den Arbeitsbetrieb auf Grundlage des Identifikationssignals anzupassen.

13. Verfahren zur Lokalisierung eines Anbauwerkzeugs (30) für ein Arbeitsgerät (10) mittels eines Systems nach einem der Ansprüche 1 bis 10, mit den Schritten:
- Erfassen einer momentanen Beschleunigung eines Anbauwerkzeugs (30) mittels eines ersten Beschleunigungssensors einer mit dem Anbauwerkzeug (30) verbundenen ersten Kommunikationseinheit (21) und Bereitstellen eines ersten Beschleunigungssignals,
- Erfassen einer momentanen Beschleunigung des Verbindungsbereichs des Arbeitsgeräts (10) mittels des zweiten Beschleunigungssensors der zweiten Kommunikationseinheit (22) und Bereitstellen eines zweiten Beschleunigungssignals,
- Übermitteln des ersten und des zweiten Beschleunigungssignals an das Identifikationsmodul, und
- Vergleichen des ersten und des zweiten Beschleunigungssignals, um das Anbauwerkzeug (30) zu verifizieren, insbesondere um zu erkennen, ob das Anbauwerkzeug (30) mit dem Arbeitsgerät (10) verbunden ist.

14. Verfahren nach Anspruch 13, wobei mindestens zwei erste Kommunikationseinheiten (21) vorgesehen sind, die mit unterschiedlichen Anbauwerkzeugen (30) verbunden sind, wobei die Anbauwerkzeuge (30) miteinander und/oder mit dem Verbindungsbereich (18) koppelbar sind, wobei auf Grundlage des zweiten Beschleunigungssignals erwartete Beschleunigungen mindestens zweier Anbauwerkzeuge (30) berechnet und mit den ersten Beschleunigungssignalen der ersten Kommunikationseinheiten (21) der Anbauwerkzeuge (30) verglichen werden, um zu erkennen, ob eines oder mehrere der Anbauwerkzeuge (30) mit dem Arbeitsgerät (10) verbunden sind und/oder um eine Plausibilitätsbewertung für einen angenommenen oder durch die erste Kommunikationseinheit (21) übermittelten Rüstzustand des Arbeitsgeräts (10) durchzuführen.

15. Verfahren nach Anspruch 14 war, wobei für die Plausibilitätsbewertung Informationen betreffend einen Standort und/oder eine Abmessung und/oder einen Typ und/oder eine sonstige Eigenschaft der Anbauwerkzeuge (30) berücksichtigt werden, welche vorzugsweise durch die jeweiligen ersten Kommunikationseinheiten (21) an das Identifikationsmodul übermittelt werden und/oder, wobei ein Identifikationssignal betreffend einen Standort und/oder eine Abmessung und/oder den Typ und/oder eine sonstige Eigenschaft eines Anbauwerkzeugs (30) von der zugeordneten ersten Kommunikationseinheit (21) bereitgestellt wird und das Identifikationssignal an eine Steuerung des Arbeitsgeräts (10) übermittelt wird, welche den Betrieb des Arbeitsgeräts (10) auf Grundlage des Identifikationssignals anpasst.

## Claims

1. System for locating an attachment tool (30) for a working machine (10), comprising:
- a first communication unit (21), connectable to an attachment tool (30), having a first acceleration sensor, which is configured to provide a first acceleration signal relating to a current acceleration of the attachment tool (30),
- a second communication unit (22), connectable to the working machine (10) in the region of a connection region (18) for the attachment tool (30), having a second acceleration sensor, which is configured to provide a second acceleration signal relating to a current acceleration of the connection region (18), and
- an identification module, which is coupled to the first and/or second communication unit (21, 22) and configured to receive the first and second acceleration signals and to compare them with one another by means of suitable evaluation methods, in order to assign the attachment tool to the working machine on the basis of this comparison.

2. System according to claim 1, wherein the first communication unit (21) is configured to wirelessly transmit the first acceleration signal to a receiving unit, wherein the receiving unit is preferably configured to receive signals within a limited reception radius.

3. System according to claim 2, wherein the second communication unit (22) comprises the receiving unit and is configured to provide the first and the second acceleration signal to the identification module, wherein the second communication unit (22) comprises the identification module or an identification unit (24) connected to the working machine (10) is provided, which comprises the identification module and is configured to receive the first and the second acceleration signal from the second communication unit (22) in a wired or wireless manner.

4. System according to claim 2, wherein an identification unit (24) connectable to the working machine (10) is provided, which comprises the identification module and the receiving unit, wherein the second communication unit (22) is configured to transmit the second acceleration signal to the identification unit (24) in a wired or wireless manner.

5. System according to any one of the preceding claims, wherein the first communication unit (21) is configured to provide an identification signal relating to a location and/or a dimension and/or the type and/or another property of the attachment tool (30) and to transmit it to the identification module and/or a controller (26) of the working machine (10).

6. System according to any one of the preceding claims, wherein the identification module is configured, when comparing the first and second acceleration signals, to take into account one or more of the following items of information:
- a property, in particular signal strength, of the radio connection of the first communication unit,
- a current location of the attachment tool (30), which is preferably determinable by means of a location-determining unit arranged on the attachment tool (30),
- a position of the first communication unit (21) on an attachment tool (30),
- a current position of the working machine (10), which is preferably determinable by means of at least one sensor,
- a current coupling state of the attachment tool (30) with the connection region of the working machine (10), which is preferably determinable by means of a coupling sensor.

7. System according to any one of the preceding claims, wherein the identification module is configured to receive first acceleration signals from first communication units (21) of a plurality of attachment tools (30) and to compare each of these first acceleration signals with a second acceleration signal of the second communication unit (22), in order to determine, on the basis of the comparisons, whether an attachment tool (30) and/or which of the attachment tools (30) is connected to the working machine (10).

8. System according to claim 7, wherein the identification module is configured, when determining whether one and/or which of the attachment tools (30) is connected to the working machine (10), to take into account one or both of the following criteria:
- a difference between a first and a second acceleration signal,
- a difference between a second acceleration signal and an expected acceleration for an attachment tool (30) calculated on the basis of the second acceleration signal.

9. System according to any one of the preceding claims, wherein at least two first communication units (21) are provided, which are connectable to different attachment tools (30) that are couplable to one another and/or to the connection region (18), wherein the identification module is configured to receive the first acceleration signals of the at least two first communication units (21) and to compare them with one another and/or with the second acceleration signal, in order to determine an attachment sequence of the attachment tools (30) on the basis of the comparison.

10. System according to any one of the preceding claims, wherein at least two first communication units (21) are connectable to respectively different attachment tools, which additionally communicate with one another.

11. System according to any one of the preceding claims, wherein the identification module is configured to calculate, on the basis of the second acceleration signal, an expected acceleration for an attachment tool (30) and to compare it with the first acceleration signal of the first communication unit (21) of the attachment tool (30), in order to recognize, on the basis of the comparison, whether the attachment tool (30) is connected to the working machine (10) and/or to carry out a plausibility assessment for an assumed set-up state of the working machine (10).

12. Set comprising a working machine (10), in particular a hydraulic excavator, at least one attachment tool (30) and a system according to any one of the preceding claims, wherein the first communication unit (21) is connected to the attachment tool (30) and the second communication unit (22) is connected to the working machine (10), wherein the working machine (10) preferably comprises a controller (26), which is configured to receive an identification signal relating to a location and/or a dimension and/or the type and/or other properties of the attachment tool (30) and to adapt the working operation on the basis of the identification signal.

13. Method for locating an attachment tool (30) for a working machine (10) by means of a system according to any one of claims 1 to 10, comprising the steps of:
- detecting a current acceleration of an attachment tool (30) by means of a first acceleration sensor of a first communication unit (21) connected to the attachment tool (30) and providing a first acceleration signal,
- detecting a current acceleration of the connection region of the working machine (10) by means of the second acceleration sensor of the second communication unit (22) and providing a second acceleration signal,
- transmitting the first and the second acceleration signal to the identification module, and
- comparing the first and the second acceleration signal in order to verify the attachment tool (30), in particular in order to recognize whether the attachment tool (30) is connected to the working machine (10).

14. Method according to claim 13, wherein at least two first communication units (21) are provided, which are connected to different attachment tools (30), wherein the attachment tools (30) are couplable to one another and/or to the connection region (18), wherein, on the basis of the second acceleration signal, expected accelerations of at least two attachment tools (30) are calculated and compared with the first acceleration signals of the first communication units (21) of the attachment tools (30), in order to recognize whether one or more of the attachment tools (30) are connected to the working machine (10) and/or in order to carry out a plausibility assessment for an assumed set-up state of the working machine (10) or a set-up state of the working machine (10) transmitted by the first communication unit (21).

15. Method according to claim 14, wherein, for the plausibility assessment, information relating to a location and/or a dimension and/or a type and/or another property of the attachment tools (30) is taken into account, which is preferably transmitted by the respective first communication units (21) to the identification module, and/or wherein an identification signal relating to a location and/or a dimension and/or the type and/or another property of an attachment tool (30) is provided by the assigned first communication unit (21) and the identification signal is transmitted to a controller of the working machine (10), which adapts the operation of the working machine (10) on the basis of the identification signal.

## Revendications

1. Système de localisation d'un outil rapporté (30) pour un engin de travail (10), comprenant :
- une première unité de communication (21), pouvant être reliée à un outil rapporté (30), avec un premier capteur d'accélération, laquelle est configurée pour fournir un premier signal d'accélération concernant une accélération momentanée de l'outil rapporté (30),
- une deuxième unité de communication (22), pouvant être reliée à l'engin de travail (10) dans la zone d'une zone de liaison (18) pour l'outil rapporté (30), avec un deuxième capteur d'accélération, laquelle est configurée pour fournir un deuxième signal d'accélération concernant une accélération momentanée de la zone de liaison (18), et
- un module d'identification, lequel est couplé à la première et/ou à la deuxième unité de communication (21, 22) et configuré pour recevoir les premiers et deuxièmes signaux d'accélération et les comparer entre eux au moyen de méthodes d'évaluation appropriées, afin d'associer l'outil rapporté à l'engin de travail sur la base de cette comparaison.

2. Système selon la revendication 1, dans lequel la première unité de communication (21) est configurée pour transmettre sans fil le premier signal d'accélération à une unité de réception, l'unité de réception étant de préférence configurée pour recevoir des signaux à l'intérieur d'un rayon de réception limité.

3. Système selon la revendication 2, dans lequel la deuxième unité de communication (22) comprend l'unité de réception et est configurée pour fournir le premier et le deuxième signal d'accélération au module d'identification, la deuxième unité de communication (22) comprenant le module d'identification ou une unité d'identification (24) reliée à l'engin de travail (10) étant prévue, laquelle comprend le module d'identification et est configurée pour recevoir le premier et le deuxième signal d'accélération de la deuxième unité de communication (22) de manière filaire ou sans fil.

4. Système selon la revendication 2, dans lequel une unité d'identification (24), pouvant être reliée à l'engin de travail (10), est prévue, laquelle comprend le module d'identification et l'unité de réception, la deuxième unité de communication (22) étant configurée pour transmettre le deuxième signal d'accélération à l'unité d'identification (24) de manière filaire ou sans fil.

5. Système selon l'une des revendications précédentes, dans lequel la première unité de communication (21) est configurée pour fournir un signal d'identification concernant un emplacement et/ou une dimension et/ou le type et/ou une autre propriété de l'outil rapporté (30) et pour le transmettre au module d'identification et/ou à une commande (26) de l'engin de travail (10).

6. Système selon l'une des revendications précédentes, dans lequel le module d'identification est configuré, lors de la comparaison des premiers et deuxièmes signaux d'accélération, pour prendre en compte une ou plusieurs des informations suivantes :
- une propriété, en particulier l'intensité du signal, de la liaison radio de la première unité de communication,
- un emplacement momentané de l'outil rapporté (30), lequel est de préférence déterminable au moyen d'une unité de détermination d'emplacement disposée sur l'outil rapporté (30),
- une position de la première unité de communication (21) sur un outil rapporté (30),
- une position momentanée de l'engin de travail (10), laquelle est de préférence déterminable au moyen d'au moins un capteur,
- un état de couplage momentané de l'outil rapporté (30) avec la zone de liaison de l'engin de travail (10), lequel est de préférence déterminable au moyen d'un capteur de couplage.

7. Système selon l'une des revendications précédentes, dans lequel le module d'identification est configuré pour recevoir des premiers signaux d'accélération provenant de premières unités de communication (21) de plusieurs outils rapportés (30) et pour comparer chacun de ces premiers signaux d'accélération avec un deuxième signal d'accélération de la deuxième unité de communication (22), afin de déterminer, sur la base des comparaisons, si un outil rapporté (30) et/ou lequel des outils rapportés (30) est relié à l'engin de travail (10).

8. Système selon la revendication 7, dans lequel le module d'identification est configuré, lors de la détermination de savoir si un et/ou lequel des outils rapportés (30) est relié à l'engin de travail (10), pour prendre en compte l'un ou les deux des critères suivants :
- une différence entre un premier et un deuxième signal d'accélération,
- une différence entre un deuxième signal d'accélération et une accélération attendue pour un outil rapporté (30), calculée sur la base du deuxième signal d'accélération.

9. Système selon l'une des revendications précédentes, dans lequel au moins deux premières unités de communication (21) sont prévues, qui peuvent être reliées à différents outils rapportés (30) pouvant être couplés entre eux et/ou avec la zone de liaison (18), le module d'identification étant configuré pour recevoir les premiers signaux d'accélération des au moins deux premières unités de communication (21) et pour les comparer entre eux et/ou avec le deuxième signal d'accélération, afin de déterminer, sur la base de la comparaison, un ordre de montage des outils rapportés (30).

10. Système selon l'une des revendications précédentes, dans lequel au moins deux premières unités de communication (21) peuvent être reliées respectivement à différents outils rapportés, qui communiquent en outre entre eux.

11. Système selon l'une des revendications précédentes, dans lequel le module d'identification est configuré pour calculer, sur la base du deuxième signal d'accélération, une accélération attendue pour un outil rapporté (30) et pour la comparer avec le premier signal d'accélération de la première unité de communication (21) de l'outil rapporté (30), afin de reconnaître, sur la base de la comparaison, si l'outil rapporté (30) est relié à l'engin de travail (10) et/ou d'effectuer une évaluation de plausibilité pour un état d'équipement supposé de l'engin de travail (10).

12. Ensemble composé d'un engin de travail (10), en particulier d'une pelle hydraulique, d'au moins un outil rapporté (30) et d'un système selon l'une des revendications précédentes, dans lequel la première unité de communication (21) est reliée à l'outil rapporté (30) et la deuxième unité de communication (22) est reliée à l'engin de travail (10), l'engin de travail (10) comprenant de préférence une commande (26), laquelle est configurée pour recevoir un signal d'identification concernant un emplacement et/ou une dimension et/ou le type et/ou d'autres propriétés de l'outil rapporté (30) et pour adapter le fonctionnement de travail sur la base du signal d'identification.

13. Procédé de localisation d'un outil rapporté (30) pour un engin de travail (10) au moyen d'un système selon l'une des revendications 1 à 10, comprenant les étapes suivantes :
- détection d'une accélération momentanée d'un outil rapporté (30) au moyen d'un premier capteur d'accélération d'une première unité de communication (21) reliée à l'outil rapporté (30) et fourniture d'un premier signal d'accélération,
- détection d'une accélération momentanée de la zone de liaison de l'engin de travail (10) au moyen du deuxième capteur d'accélération de la deuxième unité de communication (22) et fourniture d'un deuxième signal d'accélération,
- transmission du premier et du deuxième signal d'accélération au module d'identification, et
- comparaison du premier et du deuxième signal d'accélération afin de vérifier l'outil rapporté (30), en particulier afin de reconnaître si l'outil rapporté (30) est relié à l'engin de travail (10).

14. Procédé selon la revendication 13, dans lequel au moins deux premières unités de communication (21) sont prévues, qui sont reliées à différents outils rapportés (30), les outils rapportés (30) pouvant être couplés entre eux et/ou avec la zone de liaison (18), des accélérations attendues d'au moins deux outils rapportés (30) étant calculées sur la base du deuxième signal d'accélération et comparées avec les premiers signaux d'accélération des premières unités de communication (21) des outils rapportés (30), afin de reconnaître si un ou plusieurs des outils rapportés (30) sont reliés à l'engin de travail (10) et/ou afin d'effectuer une évaluation de plausibilité pour un état d'équipement supposé de l'engin de travail (10) ou un état d'équipement de l'engin de travail (10) transmis par la première unité de communication (21).

15. Procédé selon la revendication 14, dans lequel, pour l'évaluation de plausibilité, des informations concernant un emplacement et/ou une dimension et/ou un type et/ou une autre propriété des outils rapportés (30) sont prises en compte, lesquelles sont de préférence transmises au module d'identification par les premières unités de communication (21) respectives, et/ou dans lequel un signal d'identification concernant un emplacement et/ou une dimension et/ou le type et/ou une autre propriété d'un outil rapporté (30) est fourni par la première unité de communication (21) associée et le signal d'identification est transmis à une commande de l'engin de travail (10), laquelle adapte le fonctionnement de l'engin de travail (10) sur la base du signal d'identification.
